# EUROPEAN PATENT APPLICATION

(11) **EP 3 761 021 A1**
(43) Date of publication of application: **06.01.2021**
(21) Application number: 19382565.0
(22) Date of filing: 03.07.2019
(51) Int. Cl.: G01N 29/04, G01M 7/02, G01N 29/11, G01N 29/12, G01N 29/22, G01N 29/44

(54) **A COMPUTER-IMPLEMENTED METHOD AND A SYSTEM FOR NONDESTRUCTIVE INSPECTION**

(71) Applicant: The Boeing Company, Chicago, IL 60606-2016 (US)
(72) Inventor: BOLD, JENS, 28042 MADRID (ES); LAPENA, NIEVES, 28042 MADRID (ES)
(74) Representative: Clarke Modet & Co.

(57) **Abstract**

A computer-implemented method and a system for nondestructive inspection of a part of a structure is disclosed. The method includes vibrating the part; measuring vibration frequencies of the part using a sensor unit comprising one or more microphones; obtaining a first frequency response of the part and identifying at least one Eigenfrequency in the first frequency response; comparing the at least one Eigenfrequency with an expected vibration frequency and obtaining a difference therebetween; and determining that the part is defective based on the difference between the Eigenfrequency and the expected vibration frequency.

## Description

### FIELD

The present disclosure relates generally to techniques for nondestructive inspection of structural components and, more particularly to quality control systems and methods for detecting structural damage in a part of a structure using frequency response.

### BACKGROUND

Many mechanical systems, such as commercial vehicles, manufacturing equipment, and other industrial systems, may be exposed to particularly energetic environmental conditions, such as vibration, temperature extremes, impacts and mechanical stresses. For example, even when on the ground, aircraft may be exposed to significant stresses during cargo loading and unloading, as well as impacts from support vehicles and ground support equipment. During flight, stresses and/or impacts may result during take-off and landing, from shifting or improperly secured cargo, from impacts with objects during flight, and the like. In addition, thermal stresses may result due to exposure to high or low temperatures.

It is therefore common for components to be routinely inspected and evaluated during the operational lifetime, but also during the production process. The integrity of structural components manufactured using 3D printing may be compromised without an accompanying visually detectable indication of the effect of environmental conditions on the components. 3D printing is also called additive manufacturing (AM) which may be defined as a process of joining materials to make objects from Computer Aided Design (CAD) model data, usually layer upon layer, as opposed to subtractive manufacturing methods.

Currently, the AM components are normally inspected using x-ray techniques or computer tomography. Such techniques require expensive equipment and complicated procedures. This makes inspections laborious, difficult, and expensive. Furthermore, certain micro fractures might not be found during x-ray or computer tomography due to the resolution of the systems.

Alternatively, liquid penetrant techniques could be used. However, these have to be performed manually by operators. They are time-consuming and depend on the skills and experience of a particular operator. Dye penetrant is a commonly used method for metha maschined and fasted part but also here, small cracks - especially when thermal stresses induce compression loads in the cracks - may not be easily found by human manual inspection.

In addition, if the component is an additive manufactured part that is manufactured layer by layer using a welding process with lasers, thermal stresses will occur inside the part and may induce micro cracks where existing inspection techniques are less suitable since they are either expensive due to the equipment or labor intensive due to manual work. Today, all AM parts have to be fully inspected.

Accordingly, needs exist for nondestructive inspection techniques that can indicate cumulative effects on structural components after manufacturing or after being exposed to environmental conditions during operation. Such indications may lead to the scheduling of further evaluation, maintenance and/or replacement of the structural components at appropriate times.

### SUMMARY

A method and a system for detecting micro fractures of a part by using Eigenfrequencies may be disclosed herein. In a certain example, a computer-implemented method for nondestructive inspection of a part of a structure is disclosed. The computer-implemented method can include vibrating the part, measuring vibration frequencies of the part using a sensor unit comprising one or more microphones, obtaining a first frequency response of the part and identifying at least one Eigenfrequency in the first frequency response, comparing the at least one Eigenfrequency with an expected vibration frequency and obtaining a difference therebetween, and determining that the part is defective based on the difference between the Eigenfrequency and the expected vibration frequency.

In another example, a system for nondestructive inspection of a part of a structure is disclosed. The system can include an acoustic chamber configured to receive the part, a sensor unit coupled to the acoustic chamber and configured to measure vibration frequencies of the part to obtain a frequency response of the part and to identify at least one Eigenfrequency in the frequency response, and a processing unit. The processing unit can be configured to compare the at least one Eigenfrequency with an expected vibration frequency to obtain a difference therebetween and identify the part as defective based on the difference.

Advantageous developments of the method and system are discussed as follows. The features, functions, and advantages that have been discussed can be achieved independently in various examples or may be combined in yet other examples further details of which can be seen with reference to the following description and drawings.

### BRIEF DESCRIPTION OF THE DRAWINGS

A series of drawings, which aid in better understanding the disclosure and which are presented as non-limiting examples and are very briefly described below.
FIG. 1A shows a representation of an original part with no defects.
FIG. 1B shows a representation of a defective part with a micro fracture.
FIG. 2A shows a representation of a frequency response for an original part and defective part in a first set of frequencies.
FIG. 2B shows a representation of a frequency response for an original part and defective part in a second set of frequencies.
FIG. 3 shows a graphical representation of frequency responses and normalized amplitudes for an original part and a defective part according to FIGs 2A and 2B.
FIGs. 4A-4C show several possibilities for placing a part to be tested.
FIGs. 5A-5B show two acoustic chambers with and without internal damping.
FIG. 6 shows a flow diagram of several steps of an overall example of a method.
FIG. 7 shows a high-level block diagram of an overall example of a system.

### Numerals

- **2**: Non-original AM part.
- **4**: Micro fracture.
- **6**: Original AM part.
- **8**: Displacement distribution regions.
- **52**: Acoustic chamber
- **54**: Internal damper
- **56**: Handle.
- **60**: Updating frequency response step.
- **62**: Geometrical measuring step.
- **64**: Arranging step.
- **66**: Placing step.
- **68**: Acoustic measuring step.
- **70**: Processing unit.
- **76**: Sensor unit.

### DETAILED DESCRIPTION

Various examples illustrate techniques for inspecting and diagnosing a part of a structure, like an aircraft. It is proposed using different measuring devices to measure the frequency on the part of the structure and measured at two separate time intervals. Without limitation, the various examples are referred to AM parts. Yet the techniques disclosed are equally valid for other sort of industrial components.

The proposed techniques utilize the characteristic that similar non-defective parts produce very similar frequency responses. However, if one of the parts is defective, e.g. due to a crack, the frequency response changes dramatically. While factors like temperature or humidity might influence, they do so in an insignificant amount.

In practice, for an AM part, a frequency response can be calculated by finite element analysis before the first AM part is even built. Additionally or alternatively, the obtained frequency response can be obtained with real measurements.

Thus, the present disclosure proposes a method and a system for an inexpensive and safe technique of detecting micro fractures of a part by using Eigenfrequencies. Furthermore, in particular, it allows an environmental friendly procedure to be advantageously implemented in serial production of additive manufacturing (AM) parts but also during maintenance. It can be used in many fields. For instance, in aerospace for all structures and interior (furniture, interior, seats, etc.) but also in automotive, wind energy, sports articles, etc.

An Eigenfrequency should be understood as a frequency at which a system tends to oscillate in the absence of any driving or damping force.

The present disclosure can include scanning Eigenfrequencies of a part, in particular an AM part, obtaining a frequency response representative of the part, comparing the frequency response of a part with an expected frequency response using numerical analysis from finite element calculations or real measurements.

The expected frequency response can be obtained applying numerical analysis and finite element calculations from a similar part that is known to be free of defects, like micro fractures, faults, etc. This is referred to as an original part. Note that a reduction of local stiffness in a component causes a variation of one or more Eigenfrequencies. Consequently, the frequency response can be used as a signature that identify that, in the part, the geometry and/or stiffness is not distributed in a correct way.

Alternatively or additionally, frequency responses can be obtained defining two separate time periods for performing measurements to the part, one, as new part, before being used and, two, after the part has been used.

To obtain a frequency response the part should be properly placed. For instance by laying on a plate, hanging on a hook or fixed at a support, among other possibilities. The placing of the part can be either done before or inside a measurement acoustic chamber suitable for frequency response measurements. This acoustic chamber can be either equipped with or without acoustic damping. The measurements performed by a sensor unit can be either done with microphone or other suitable devices like piezo-electrical devices to measure the frequency response of, for instance, a new or used part. These devices of the sensor unit can be inside or outside the chamber.

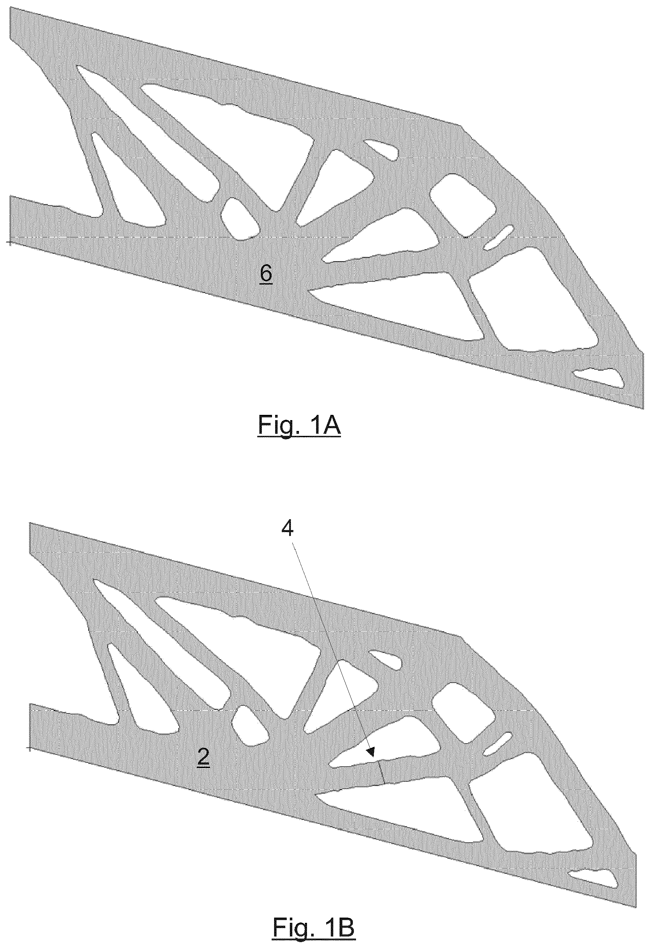

FIG. 1A shows an example of an original AM part **6**, which is known to be free of defects. This can be an AM part before installation on a structure like an aircraft, a vehicle, a wind generator, etc. AM part 6 can, in certain examples, be an AM part with AM process remains (e.g., flash) cleaned.

FIG. 1B shows, on the other hand, an example of a defective non-original AM part **2**, which includes a micro fracture **4**.

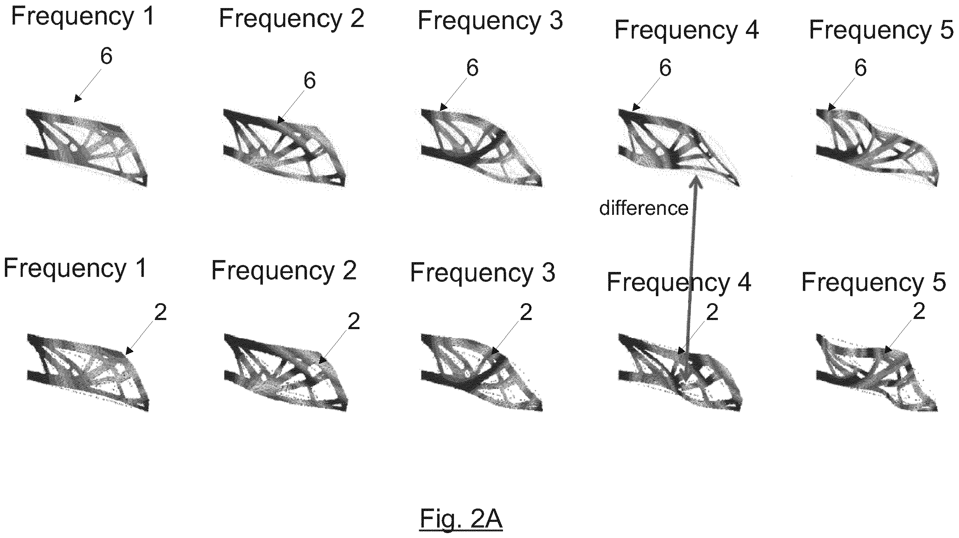

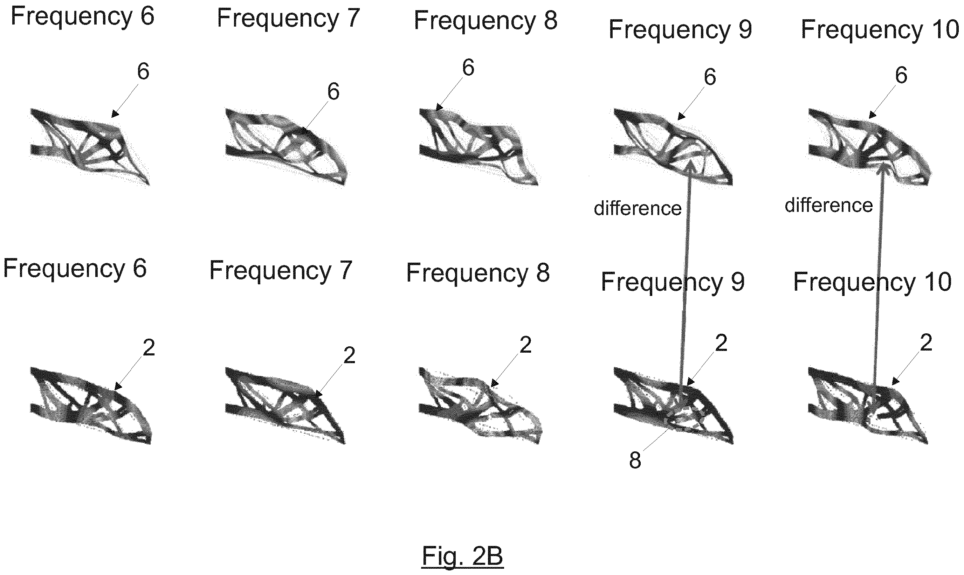

FIG. 2A shows several images of an example of an original AM part **6** and a defective non-original AM part **2**, scanned in a first set of frequencies 1-5. FIG. 2B shows several images of the original AM part **6** and the defective non-original part **2** scanned in a second set of frequencies 6-10.

As can be appreciated in FIGs. 2A and 2B, there are different areas present in the original AM part **6** and in the non-original AM part **2**. In certain examples, the different areas can be scanned through a plurality of operations, but other examples can scan the part **2** or **6** as a whole in one operation. These different areas, referred to as displacement distribution regions **8**, return different values for the normalized vibration amplitude when scanned, depending on the vibration frequency of the scanning. Displacement distribution regions **8** are illustrated in dotted line.

If a non-original AM part **2** is free of defects, the frequency response should be the same as in the original AM part **6**. However, if there is a defect or damage, typically a micro fracture **4** or a fault, the displacement distribution regions **8** in both parts **2**, **6** do not match for one or more frequencies. This outcome can serve to trigger maintenance indications, scheduling of further evaluation, or replacement or repair, if feasible, of the defective non-original AM part **4**. Furthermore, they can provide useful information in view of their properties, such as elongated extension or changes in shape over time, to be associated with a specific type of defect in an AM part. Generally, the higher the displacement, the weaker the AM part in that region. Advantageously, different thresholds can be defined to define several levels of defectiveness. In addition, not only the vibration amplitude value is useful but the corresponding value of vibration frequency as well. Defective non-original AM part **2** can normally be observed to give a response with higher frequency (weaker) and a fault with lower frequency (more damping) due to the crack.

The set of frequencies typically used are chosen depending on several aspects such as the material used, the geometry of the part, and the distribution of stiffness within the part. Each design will have its typical frequency response, which can be calculated in advance with finite element modelling methods. Based on these results, the frequency range can be adjusted.

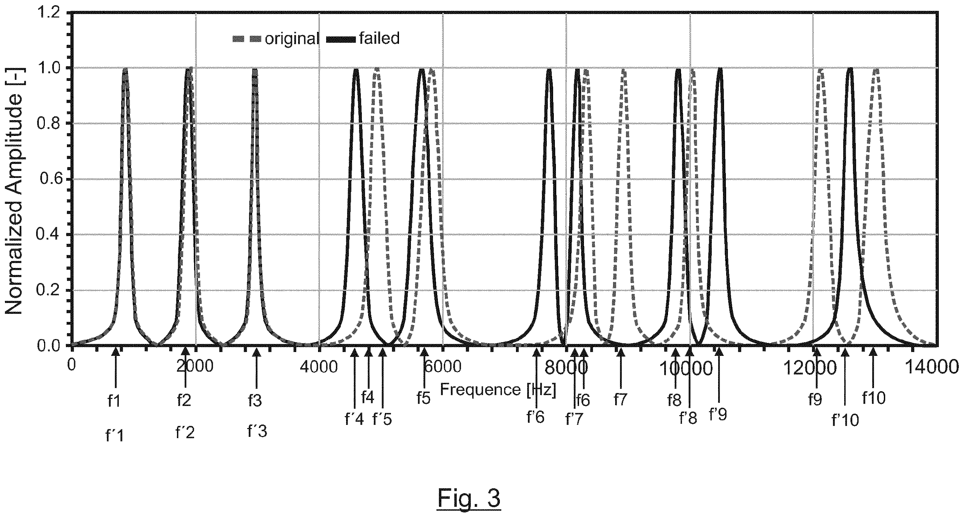

FIG. 3 shows is a graphical representation of the sets of frequency responses corresponding to FIGs 2A and 2B. As appreciated, there are overlapping pulses at certain vibration frequencies, which indicates the response is the same in both AM parts. However, frequencies *f₄* to *f₁₀* of the failed part are shifted with respect to the original part *f'₄* to *f'₁₀*. As a result, several normalized vibration amplitudes do not occur at an expected frequency *f'ᵢ*. Each part has its own frequency response spectrum. Consequently, this can imply that tested non-original AM part **2** is defective. This serves as a signature of the part.

In order to compare frequency responses, a first option is using an original AM part **6** free of defects (e.g., for first article inspection soon after production of the part). Another option relates to using the same non-original AM part and measuring the AM part at different moments throughout its lifetime, thus defining inspection intervals and analyzing its evolution. By initially obtaining a frequency response, the signature of the AM part can be defined and saved and used as a base response to detect a structural defect later in the part's service life by measuring at the same vibration frequency and comparing the responses. Thus, a micro fracture **6** or similar failures can be detected later, when the frequency response changes at subsequent inspection intervals.

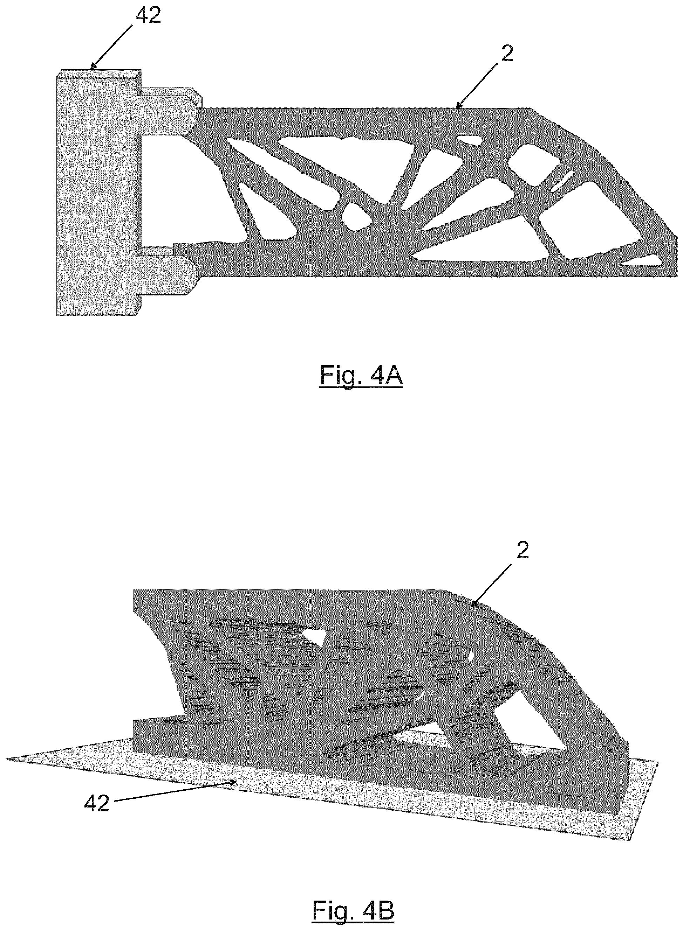

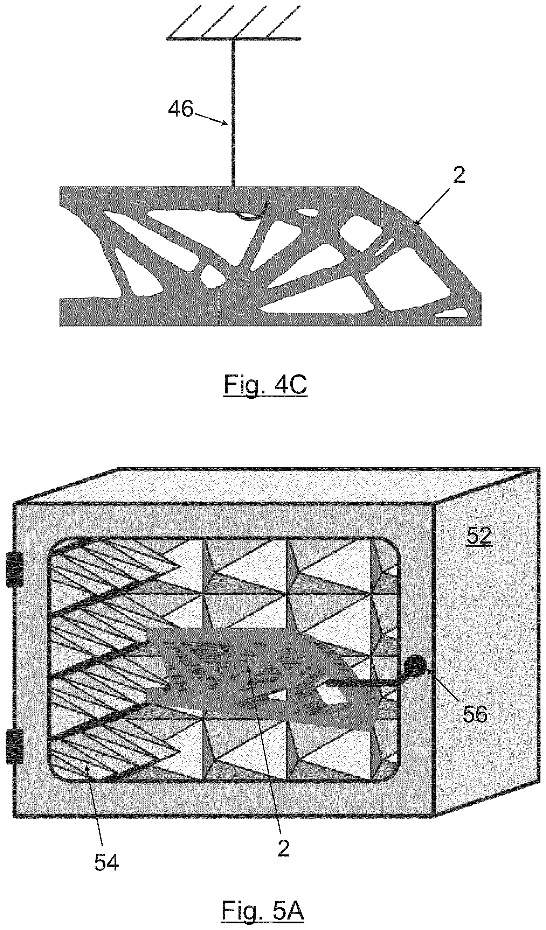

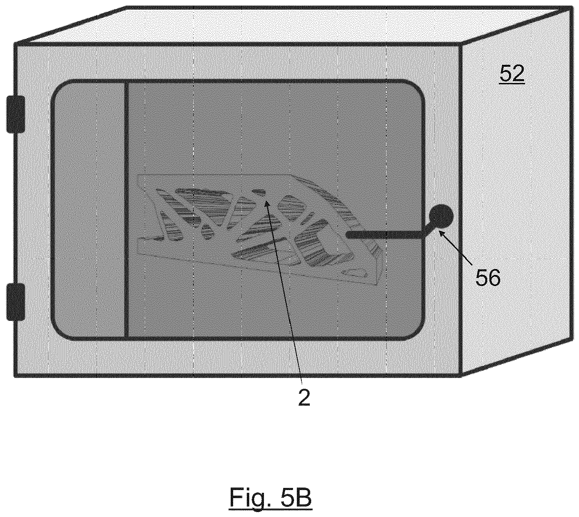

In FIG. 5A a measuring device is shown. The measuring device comprises an acoustic chamber **52** with internal damper **54** and a handle **56** for securing a part **2.** Similarly, FIG. 5B illustrates the same acoustic chamber **52** without an internal damper. In certain examples, internal dampers can be useful in allowing the part to accurately transition between frequencies without vibrations resulting from analysis at a first frequency affecting the behavior of the part at a second frequency. Microphones can be installed inside or outside the acoustic chamber **52** forming a sensor unit. The AM part to be tested is placed in the acoustic chamber **52** using any of the arrangements depicted in FIGs. 4A-4C.

By measuring at set intervals (e.g., with the microphones), it is possible to determine if the signature of the part changes. Scanning the Eigenfrequencies of the part shows if any defects such as micro fractures are present in the part due to the reduction of local stiffness. Preferably, a numerical calculation is done before installing the AM part on the structure and compared with the measured frequencies. Then, a difference in frequency responses can be established to determine the presence of a micro-fracture or damage in the part.

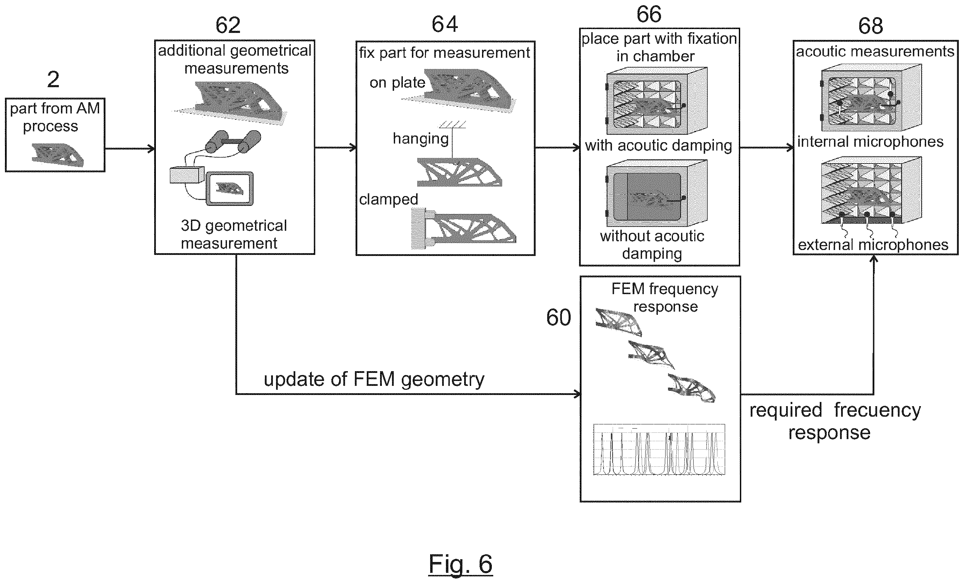

FIG. 6 shows a flow diagram of several steps of an overall example of a method.

A geometrical measuring step **62** is performed using 3D techniques. This step obtains the outside geometry of the manufactured part.

Based on the measurements from step **62**, the numerical calculation can be updated to the manufactured geometry including acceptable tolerances and a frequency response analysis can be performed using finite element methods (FEM) in step **60**. The frequency response analysis can determine the Eigenfrequencies of the AM part. These Eigenfrequencies are the frequency response of an AM part without defects. In a certain example, the frequency response analysis can be performed after updating of the FEM geometry based on the measurements from step **62**. The FEM frequency response analysis can be performed based on an AM part such as original AM part **6** or a particular non-original AM part **2** that is known to be free of defects. In certain situations, the updated frequency response analysis performed in step **60** based on the results of step **62** can be performed to obtain more accurate base data for later analysis of the AM part **2**.

Furthermore, after the geometrical measuring step **62**, an arranging step **64** can be performed to prepare an AM part for measuring frequency response. The AM part **2** is hung, clamped, simply rested, or otherwise held as indicated in FIGs. 4A-4C.

A placing step **66** is then performed to present the part for measuring of a frequency response of AM part 2. The AM part **2** is thus placed inside of an acoustic chamber as indicated in FIGs. 5A-5B. The acoustic chamber can include acoustic damping or can be without acoustic damping.

An acoustic measuring step **68** is then performed to measure the frequency response. The measurement can be performed by, for example, vibrating the AM part **2** and measuring the vibration with external or internal microphones or by scanning the part and determining the Eigen-frequencies. Such a measurement can also be performed of the part beforehand (e.g., on the original part as manufactured) and comparing the result of this original scanning to a later scanning (such as that performed in step **68**) at a later inspection interval to detect if one or more micro fractures **4** have formed since the last inspection or the original inspection by extracting modulation differences.

If the results of the scanning in step **68** are different from that of the earlier scanning (an example of which is described herein in relation to FIG. 3) by a threshold amount (e.g., different by over 10, 20, or 30 percent), a user or a computer controlled analyzer can determine the presence of one or more fractures **4**. Alternatively or additionally, the frequency response analysis results from step **60** can be compared to the frequency response measured in step **68**. If the frequency response measured in step **68** substantially differs from that of the frequency response analysis results of step **60**, the presence of one or more fractures **4** can further be determined.

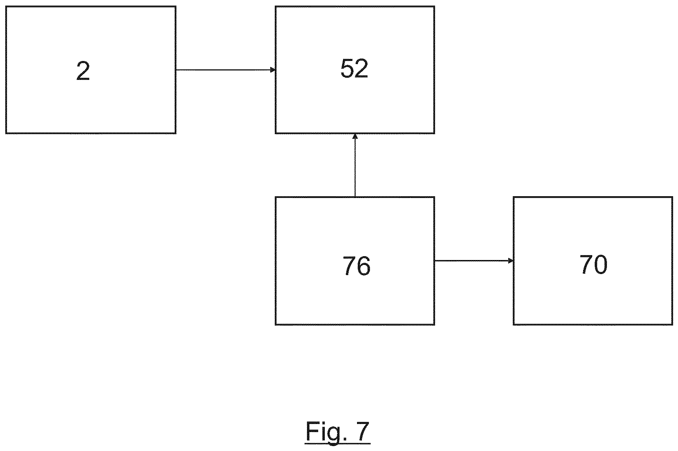

FIG. 7 shows a high-level block diagram of an overall example of a system. FIG. 7 illustrates a system that includes a processing unit **70** communicatively coupled (e.g., above to receive data signals from and provide data signals to) to sensor unit **76**. Sensor unit **76** can include one or more microphones. Sensor unit **76** is coupled to acoustic chamber **52**. Thus, sensor unit **76** is disposed within or outside of acoustic chamber **52** and able to detect vibrations of part **2** within acoustic chamber **52**.

The description of the different examples of implementations has been presented for purposes of illustration and description, and is not intended to be exhaustive or limited to the examples in the form disclosed. The techniques described can, in certain implementations, be performed by one or more electronic devices. Many modifications and variations will be apparent to those of ordinary skill in the art. The examples are selected and described in order to best explain the principles, the practical application, and to enable others of ordinary skill in the art to understand the present disclosure.

## Claims

1. A computer-implemented method for nondestructive inspection of a part (2) of a structure, the method comprising:
vibrating the part;
measuring vibration frequencies of the part (2) using a sensor unit (76) comprising one or more microphones;
obtaining a first frequency response of the part (2) and identifying at least one Eigenfrequency in the first frequency response;
comparing the at least one Eigenfrequency with an expected vibration frequency and obtaining a difference therebetween; and
determining that the part (2) is defective based on the difference between the Eigenfrequency and the expected vibration frequency.

2. The computer-implemented method according to claim 1, wherein the expected vibration frequency is obtained from at least one Eigenfrequency of a previous frequency response of the part (2,6), wherein the previous frequency response measured the frequency response of the part (2,6) when the part (2,6) was free of defects.

3. The computer-implemented method according to claim 1, wherein the expected vibration frequency is obtained from measuring the vibration frequencies of the part (2) at during a first time period, and wherein the first frequency response is measured at a second time period different from the first time period.

4. The computer-implemented method according to claim 3, wherein the first time period is a time period before the part (6) is installed on the structure and the second time period is a time period after using the part (2) on the structure.

5. The computer-implemented method according to any of claims 1 to 4, further comprising:
measuring vibration amplitudes of the part (2);
determining a plurality of displacement distribution regions (8),; and
associating the plurality of displacement distribution regions (8) with a defect in the part (2).

6. The computer-implemented method according to any of claims 1 to 5, wherein the part (2,6) is formed by additive manufacturing.

7. The computer-implemented method according to any of claims 1 to 6, wherein the structure is an aircraft.

8. A system for nondestructive inspection of a part (2) of a structure, the system comprising:
an acoustic chamber (52) configured to receive the part (2);
a sensor unit (76) coupled to the acoustic chamber (52) and configured to measure vibration frequencies of the part (2), to obtain a frequency response of the part (2), and to identify at least one Eigenfrequency in the frequency response; and
a processing unit (70), configured to:
compare the at least one Eigenfrequency with an expected vibration frequency to obtain a difference therebetween, and
identify the part (2) as defective based on the difference.

9. The system of claim 8, wherein the acoustic chamber (52) comprises an internal damper configured to damp at least a portion of the part (2).

10. The system of claim 8 or 9, wherein the sensor unit (76) comprises a microphone (56) or a piezo-electrical device.

11. The system of claims 8 to 10, wherein the expected vibration frequency is obtained from at least one Eigenfrequency of a previous response of the part (2,6) when the part (2,6) was free of defects.

12. The system of claim 11, wherein the expected vibration frequency is obtained from measuring the vibration frequencies of the part (2,6) during a first time period, and wherein the frequency response is measured at a second time period different from the first time period.

13. The system of claim 12, wherein the first time period is a time period before the part (2,6) is installed on the structure and the second time period is a time period after using the part (2) on the structure.

14. The system of claim 13, wherein the sensor unit (76) is further configured to measure vibration amplitudes of the part (2) to determine a plurality of displacement distribution regions (8).

15. The system of claim 14, wherein the processing unit (70) is configured to associate the plurality of displacement distribution regions (8) with a defect in the part (2).
